# FASCICULE DE BREVET EUROPEEN

(11) **EP 3 585 581 B1**
(45) Date de publication et mention de la délivrance du brevet: **14.09.2022**
(21) Numéro de dépôt: 18709693.8
(22) Date de dépôt: 23.02.2018
(51) Int. Cl.: B29C 45/14, B60J 10/18, B60J 10/82, B29C 45/00, B29K 223/00, B29K 21/00

(54) **PROCEDE D'ENCAPSULATION**
VERKAPSELUNGSVERFAHREN
ENCAPSULATION METHOD

(30) Priorité: 27.02.2017 FR 1751577
(43) Date de publication de la demande: 01.01.2020
(73) Titulaire: SAINT-GOBAIN GLASS FRANCE, 92400 Courbevoie (FR)
(72) Inventeur: STRICHER, Arthur, 60280 Margny les Compiegne (FR); PIROUX, Fabienne, 60200 Compiegne (FR); KLEO, Christophe, 60350 Attichy (FR); GRANDGIRARD, Bastien, 60490 Marqueglise (FR); BLANC, Olivier, 60170 Tracy Le Mont (FR)
(74) Mandataire: Saint-Gobain Recherche
(86) Numéro de dépôt international: PCT/FR2018/050434
(87) Numéro de publication internationale: WO 2018/154251

(56) Documents cités:
- WO-A1-2015/145021
- FR-A1- 2 856 003

## Description

La présente invention concerne un procédé de fabrication d'un vitrage automobile complexe, de préférence d'un toit vitré, comprenant une étape d'encapsulation par injection d'un élastomère thermoplastique fluidifié dans un moule d'encapsulation contenant un insert métallique de grande taille.

Dans le domaine industriel des vitrages automobiles, le terme « encapsulation » désigne un procédé ou une étape de surmoulage d'une matière polymérique autour du périmètre d'une vitre. Une composition d'encapsulation contenant la matière polymérique ou des précurseurs de la matière polymérique, est injectée à l'état de fluide plus ou moins visqueux dans un moule formant une cavité étanche autour du bord de la vitre. Après durcissement de la composition, par refroidissement ou réticulation, le moule est ouvert et retiré, laissant en périphérie de la vitre un cordon profilé en contact avec la tranche et avec au moins une des deux faces de la vitre.

Le document FR 2 856 003 divulgue un procédé de fabrication d'un vitrage automobile comprenant une vitre, un joint élastomère et un insert métallique surmoulé par le joint élastomère.

Le polymère durci qui forme le cordon profilé est souvent un élastomère capable de jouer le rôle de joint entre le vitrage et la carrosserie.

Les élastomères les plus communément utilisés en tant que matière d'encapsulation pour la fabrication de toits automobiles vitrés sont des polyuréthanes obtenus par moulage par injection-réaction (RIM de l'anglais *reaction injection moulding*)*.* Les précurseurs, monomères ou oligomères, généralement des polyols et polyisocyanates, sont injectés dans le moule où ils réagissent pour former un réseau tridimensionnel réticulé.

L'encapsulation par RIM est particulièrement appropriée en particulier pour la fabrication de vitrages automobiles complexes, tels que des toits vitrés, comprenant non seulement une vitre et un joint élastomère, mais également des inserts métalliques de grande taille qui jouent un rôle de renfort mécanique. Ces vitrages automobiles complexes peuvent en outre comprendre d'autres pièces, partiellement ou complètement incorporées dans l'encapsulation, telles que des pions de centrage ou des supports latéraux (*side brackets*).

La composition d'encapsulation RIM, du fait de sa très grande fluidité remplit parfaitement même les endroits difficiles d'accès de la cavité du moule. Par ailleurs, l'adhésion du polyuréthane réticulé à la surface de l'insert métallique, généralement protégé contre la corrosion par une peinture appliquée par cataphorèse, est excellente.

L'utilisation de polymères thermoplastiques et en particulier d'élastomères thermoplastiques (TPE) pour l'encapsulation de vitrages automobiles constitue une alternative très intéressante aux élastomères thermodurcis obtenus par RIM.

Les joints de vitrages automobiles à base de TPE sont en effet recyclables, ce qui n'est pas le cas des joints à base de polyuréthanes RIM. Par ailleurs, l'utilisation de TPE fait disparaître les problèmes liés à l'utilisation de monomères volatils réactifs et toxiques tels que des isocyanates.

La fabrication de joints à partir d'élastomères thermoplastiques a déjà été mise en oeuvre avec succès pour l'encapsulation de vitrages automobiles simples et de taille relativement modeste, tels que des custodes.

Pour l'encapsulation de vitrages automobiles de plus grande taille, et en particulier pour des vitrages automobiles, tels que des toits, comprenant des inserts métalliques surmoulés ayant un rôle de renforcement mécanique, l'utilisation de TPE reste problématique et n'a jusqu'ici pas été envisagée à l'échelle industrielle.

Un des problèmes techniques auxquels est confronté l'homme du métier lorsqu'il utilise des compositions d'encapsulation à base de TPE pour fabriquer des joints de vitrages complexes avec des inserts de grande taille est l'obtention d'une adhésion insuffisante du TPE à la surface de l'insert métallique. Ces inserts métalliques, par exemple des profilés d'une longueur de plusieurs dizaines de centimètres, sont généralement revêtus d'une peinture déposée par cataphorèse. Cette peinture, généralement constituée d'un polymère cationique thermodurci, ne présente pas d'affinité particulière pour un polymère thermoplastique. L'adhésion insuffisante entre l'insert et le joint thermoplastique pourrait se traduire par une délamination partielle ou totale, puis la perte de l'intégrité du vitrage.

La présente invention est basée sur l'idée d'améliorer l'adhésion entre le joint en TPE et l'insert en utilisant des inserts préalablement revêtus d'une couche de polypropylène et en utilisant en tant que matériau élastomère thermoplastique un compound d'un TPE et de polypropylène (compound TPE/PP). Le compound TPE/PP injecté à chaud ramollit suffisamment le polypropylène de l'insert pour que les chaînes de polypropylène des deux composants puissent s'interpénétrer et former un lien solide.

La présente demande a donc pour objet un procédé de fabrication d'un vitrage automobile complexe comprenant une vitre, un joint élastomère et un insert métallique surmoulé par le joint élastomère, comprenant
- l'insertion du bord d'une vitre et d'un insert métallique dans un moule d'encapsulation formant une cavité étanche autour du bord de la vitre,
- le remplissage de la cavité étanche contenant le bord de la vitre et l'insert métallique, par injection d'une composition d'encapsulation comprenant un compound polypropylène (PP)/élastomère thermoplastique (TPE) à l'état fondu,
- le refroidissement de la composition d'encapsulation de manière à former un joint élastomère dans lequel est intégré l'insert métallique,
- le démoulage du joint élastomère dans lequel est intégré l'insert métallique,
   le procédé étant caractérisé par le fait que ledit compound PP/TPE comprend de 30 à 80 % en poids, de préférence de 40 à 75 % en poids et en particulier de 45 à 70 % en poids de polypropylène (PP), et par le fait que l'insert métallique est recouvert sur toute sa surface susceptible de venir en contact avec la composition d'encapsulation, d'un revêtement en polypropylène.

La vitre à encapsuler peut être une vitre en verre minéral ou bien en en matière plastique. Elle peut être constituée d'une seule feuille de verre ou de matière plastique ou bien être formées de deux ou plus de deux feuilles de verre ou de plastique, collées l'une à l'autre au moyen de ce qu'on appelle classiquement un intercalaire de feuilletage, constitué généralement de poly(butyral de vinyle) (PVB) ou de copolymère poly(éthylène-acétate de vinyle) (EVA).

La ou les feuilles de verre et l'intercalaire de feuilletage peuvent être colorés, la vitre dans son ensemble conservant cependant une certaine transparence, avec une transmission lumineuse (TL) qui est de préférence comprise entre 10 et 50 %, en particulier entre 15 et 40%.

Dans un mode de réalisation préféré du procédé de l'invention, la vitre est une vitre feuilletée constituée de deux feuilles de verre minéral collées l'une à l'autre au moyen d'un intercalaire de feuilletage.

Comme expliqué en introduction, le procédé de la présente invention est particulièrement utile pour des vitres présentant des dimensions assez importantes, utilisables dans des vitrages complexes tels que des toits vitrés automobiles.

Les dimensions de la vitre sont de préférence telles que son périmètre est au moins égal à 1 m, de préférence compris entre 1,0 m et 8,0 m, en particulier entre 1,3 et 4,5 m, idéalement entre 1,5 et 4,0 m.

L'insert métallique introduit dans le moule d'encapsulation avant l'injection de la composition d'encapsulation a de préférence des dimensions assez importantes, par exemple une longueur proche d'une des dimensions de la vitre, par exemple une longueur comprise entre 10 cm et 1,5 m, en particulier entre 15 et 1,2 m.

La surface de l'insert métallique susceptible de venir en contact avec la composition d'encapsulation est typiquement une surface de plusieurs dizaines de centimètres carrés, voire de plusieurs centaines de centimètres carrés, en particulier comprise entre 10 cm² et 1000 cm². Le procédé de la présente invention peut bien entendu être mis en oeuvre pour des inserts de plus petite taille ayant une surface de contact inférieure à 10 cm², mais son utilité serait moindre car il est peu probable qu'une éventuelle délamination entre la surface de l'insert et le joint surmoulé conduise à une perte de l'intégrité du vitrage.

Le terme « élastomère thermoplastique (TPE) » désigne des matériaux polymères hétérogènes comportant des domaines rigides (ou durs) et des domaines souples (ou mous). Ces matériaux ont un comportement d'élastomère dans un domaine limité de températures englobant la température ambiante, et adoptent, à des températures supérieures à la température de ramollissement des domaines rigides, un comportement plastique et peuvent par conséquent être mis en oeuvre comme des polymères thermoplastiques.

Les élastomères thermoplastiques sont connus et leur nomenclature et classification est définie dans la norme ISO 18064.

Les élastomères thermoplastiques utilisés pour le procédé selon l'invention sont de préférence choisis dans le groupe constitué des polymères suivants :
- le caoutchouc éthylène-propylène-diène monomère (EPDM) non vulcanisé,
- le caoutchouc éthylène-propylène-diène monomère (EPDM) partiellement vulcanisé, et
- les élastomères thermoplastiques styréniques (TPE-S) tels que les copolymères à blocs poly(styrène-b-butadiène-b-styrène) (SBS), les copolymères à blocs poly(styrène-b-(éthylène-butylène)-b-styrène) (SEBS) et les copolymères à blocs poly(styrène-b-(éthylène-propylène)-b-styrène) (SEPS).

Lorsque ces TPE sont mélangés avec du polypropylène, le compound TPE/PP obtenu présente également des propriétés d'élastomère thermoplastique, c'est-à-dire un comportement élastique dans un certain de domaine de température englobant la température ambiante (20 °C) et un comportement thermoplastique au-delà de ce domaine de température.

Le polypropylène n'améliore pas seulement l'adhésion entre le joint surmoulé et l'insert métallique mais augmente également de manière avantageuse la dureté Shore A des joints obtenus.

La composition d'encapsulation utilisée dans le procédé de l'invention contient, en plus du compound TPE/PP, un ou plusieurs additifs qui ont principalement pour fonction de réduire la viscosité de la composition d'encapsulation à chaud, de diminuer les coûts du matériau final obtenu, et/ou d'augmenter la stabilité physique ou chimique du matériau final obtenu.

Les additifs réducteurs de coûts sont par exemple des charges minérales telles que craie, kaolin, talc, oxyde de zinc et noir de carbone. Ils peuvent être présents en une quantité comprise typiquement entre 1 et 15 %, de préférence entre 2 et 10 % en poids, rapporté au poids total de la composition d'encapsulation. La présence de telles charges minérales augmente la dureté Shore A des joints formés.

Les huiles, de préférence des huiles minérales, servent d'adjuvants de mise en œuvre et permettant de réduire la température de transition vitreuse et de fluidifier la composition d'encapsulation chaude. Elles sont présentes par exemple à raison de 10 à 50 %, de préférence de 20 à 45 % en poids, rapporté au poids total de la composition d'encapsulation. Leur présence a peu d'effet sur la dureté du joint final.

Et enfin, des agents stabilisants anti-oxydants ou anti-UV peuvent également être présents en faible quantité, généralement inférieure à 1 % en poids.

La quantité totale de tels additifs ne doit cependant pas dépasser une limite supérieure d'environ 30 à 35 % en poids et la composition d'encapsulation comprend de préférence entre 35 et 65% en poids, de préférence entre 45 % et 60 % en poids, et en particulier entre 50 et 57 % en poids de compound PP/TPE, rapporté au poids total de la composition d'encapsulation.

Des compositions d'encapsulation prête à l'emploi contenant un compound PP/TPE et des additifs (huiles minérales/charges minérales/agents stabilisants) sont disponibles sur le marché auprès des sociétés TEKNOR APEX, EXXON, KRAIBURG, MCPP, MULTIBASE.

La composition d'encapsulation est injectée de préférence à une température comprise entre 170°C et 260°C, en particulier entre 170°C et 220°C, sous une pression comprise entre 15 bars et 120 bars, de préférence entre 15 bars et 80 bars.

Le « durcissement » de la composition d'encapsulation se fait par simple refroidissement, actif ou passif, de préférence actif, du moule et de la matière d'encapsulation. Autrement dit, l'étape de durcissement ne comprend pas d'étape de chauffage en vue de la réticulation chimique de la composition d'encapsulation.

Le démoulage du joint se fait avantageusement avant refroidissement complet jusqu'à température ambiante, par exemple à une température comprise entre 40 et 120°C.

Les inserts métalliques surmoulés peuvent être en n'importe quel matériau métallique. Ils sont de préférence en acier. Ils peuvent éventuellement être recouverts d'un revêtement de surface, organique ou minéral, comme par exemple une couche de peinture déposée par cataphorèse, qui les protège efficacement contre la corrosion.

Le revêtement en polypropylène des inserts métalliques peut donc être en contact direct avec la surface métallique ou bien peut être déposé sur la couche de peinture déposée par cataphorèse. L'épaisseur du revêtement de polypropylène est avantageusement comprise entre 0,1 et 5 mm, de préférence entre 0,5 et 4 mm, et en particulier entre 1 et 3 mm, ces fourchettes n'englobant pas l'épaisseur d'une éventuelle couche de peinture déposée par cataphorèse. Le revêtement de polypropylène peut être déposé par exemple sous forme de peinture poudre qui, sous l'action de la chaleur, se transforme en film.

Le revêtement en polypropylène est avantageusement constitué d'au moins 95 % en poids, de préférence d'au moins 98 % en poids et idéalement de 100 % en poids de polypropylène. Il est notamment de préférence exempt de charges minérales.

## Revendications

1. Procédé de fabrication d'un vitrage automobile complexe comprenant une vitre, un joint élastomère et un insert métallique surmoulé par le joint élastomère, comprenant
- l'insertion du bord d'une vitre et d'un insert métallique dans un moule d'encapsulation formant une cavité étanche autour du bord de la vitre,
- le remplissage de la cavité étanche contenant le bord de la vitre et l'insert métallique, par injection d'une composition d'encapsulation comprenant un compound polypropylène (PP)/élastomère thermoplastique (TPE) à l'état fondu,
- le refroidissement de la composition d'encapsulation de manière à former un joint élastomère dans lequel est intégré l'insert métallique,
- le démoulage du joint élastomère dans lequel est intégré l'insert métallique,
le procédé étant **caractérisé par le fait que** ledit compound PP/TPE comprend de 30 à 80 % en poids, de préférence de 40 à 75 % en poids et en particulier de 45 à 70 % en poids de polypropylène (PP), et **par le fait que** l'insert métallique est recouvert sur toute sa surface susceptible de venir en contact avec la composition d'encapsulation, d'un revêtement en polypropylène.

2. Procédé selon la revendication 1, **caractérisé par le fait que** la surface de l'insert susceptible de venir en contact avec la composition d'encapsulation est comprise entre 10 cm² et 1000 cm².

3. Procédé selon la revendication 1 ou 2, **caractérisé par le fait que** le TPE est choisi parmi
- le caoutchouc éthylène-propylène-diène monomère (EPDM) non vulcanisé,
- le caoutchouc éthylène-propylène-diène monomère (EPDM) partiellement vulcanisé, et
- les élastomères thermoplastiques styréniques (TPE-S) tels que les copolymères à blocs poly(styrène-b-butadiène-b-styrène) (SBS), les copolymères à blocs poly(styrène-b-(éthylène-butylène)-b-styrène) (SEBS) et les copolymères à blocs poly(styrène-b-(éthylène-propylène)-b-styrène) (SEPS).

4. Procédé selon l'une quelconque des revendications précédentes, **caractérisé par le fait que** le revêtement en polypropylène recouvrant l'insert métallique a une épaisseur comprise entre 0,1 et 5 mm, de préférence entre 0,5 et 4 mm, en particulier entre 1 et 3 mm.

5. Procédé selon l'une quelconque des revendications précédentes, **caractérisé par le fait que** la composition d'encapsulation contient en outre des charges minérales telles que craie, kaolin, talc, oxyde de zinc et noir de carbone, des adjuvants de mise en oeuvre tels que des huiles, de préférence des huiles minérales, ou des agents stabilisants anti-oxydants ou anti-UV.

6. Procédé selon l'une quelconque des revendications précédentes, **caractérisé par le fait que** la composition d'encapsulation comprend entre 35 et 65% en poids, de préférence entre 45 % et 60 % en poids, en particulier entre 50 et 57 % en poids de compound PP/TPE, rapporté au poids total de la composition d'encapsulation.

7. Procédé selon l'une quelconque des revendications précédentes, **caractérisé par le fait que** la composition d'encapsulation est injectée à une température comprise entre 170°C et 260°C, de préférence entre 170°C et 220°C, sous une pression comprise entre 15 bars et 120 bars, de préférence entre 15 bars et 80 bars.

8. Procédé selon l'une quelconque des revendications précédentes, **caractérisé par le fait que** l'étape de refroidissement de la composition d'encapsulation fluide se fait par refroidissement actif du moule d'encapsulation.

## Patentansprüche

1. Verfahren zur Herstellung einer komplexen Autoverglasung, die eine Glasscheibe, eine Elastomerdichtung und einen von der Elastomerdichtung umspritzten Metalleinsatz umfasst, umfassend
- Einsetzen des Randes einer Glasscheibe und eines Metalleinsatzes in eine Verkapselungsform, die einen dichten Hohlraum um den Rand der Glasscheibe bildet,
- Füllen des dichteten Hohlraums, der den Rand der Glasscheibe und den Metalleinsatz enthält, durch Einspritzen einer Verkapselungszusammensetzung, die eine Mischung aus Polypropylen (PP) und thermoplastischem Elastomer (TPE) in geschmolzenem Zustand umfasst,
- Abkühlen der Verkapselungszusammensetzung, um eine Elastomerdichtung zu bilden, in die der Metalleinsatz eingebettet ist,
- Entformen der Elastomerdichtung, in die der Metalleinsatz eingebettet ist,
wobei das Verfahren **dadurch gekennzeichnet ist, dass** die PP/TPE-Verbindung 30 bis 80 Gew.-%, vorzugsweise 40 bis 75 Gew.-% und insbesondere 45 bis 70 Gew.-% Polypropylen (PP) umfasst, und dadurch, dass der Metalleinsatz auf seiner gesamten Oberfläche, die mit der Verkapselungszusammensetzung in Kontakt kommen kann, mit einer Polypropylenbeschichtung überzogen ist.

2. Verfahren nach Anspruch 1, **dadurch gekennzeichnet, dass** die Oberfläche des Einsatzes, die mit der Verkapselungszusammensetzung in Kontakt kommen kann, zwischen 10 cm² und 1000 cm² beträgt.

3. Verfahren nach Anspruch 1 oder 2, **dadurch gekennzeichnet, dass** das TPE ausgewählt ist aus
- unvulkanisiertem Ethylen-Propylen-Dien-Monomer-Kautschuk (EPDM),
- teilvulkanisiertem Ethylen-Propylen-Dien-Monomer-Kautschuk (EPDM) und
- thermoplastischen Styrol-Elastomeren (TPE-S) wie Poly(styrol-b-butadien-b-styrol)-Blockcopolymeren (SBS-Blockcopolymere), Poly(styrol-b-(ethylen-butylen)-b-styrol)-Blockcopolymeren (SEBS-Blockcopolymere) und Poly(styrol-b-(ethylen-propylen)-b-styrol)-Blockcopolymeren (SEPS-Blockcopolymere).

4. Verfahren nach einem der vorhergehenden Ansprüche, **dadurch gekennzeichnet, dass** die Polypropylenbeschichtung, die den Metalleinsatz umhüllt, eine Dicke zwischen 0,1 und 5 mm, vorzugsweise zwischen 0,5 und 4 mm, insbesondere zwischen 1 und 3 mm, aufweist.

5. Verfahren nach einem der vorhergehenden Ansprüche, **dadurch gekennzeichnet, dass** die Verkapselungszusammensetzung zusätzlich mineralische Füllstoffe wie Kreide, Kaolin, Talkum, Zinkoxid und Ruß, Verarbeitungshilfsstoffe wie Öle, vorzugsweise Mineralöle, oder antioxidative Stabilisatoren oder UV-Schutzmittel enthält.

6. Verfahren nach einem der vorhergehenden Ansprüche, **dadurch gekennzeichnet, dass** die Verkapselungszusammensetzung bezogen auf das Gesamtgewicht der Verkapselungszusammensetzung zwischen 35 und 65 Gew.-%, vorzugsweise zwischen 45 und 60 Gew.-%, insbesondere zwischen 50 und 57 Gew.-% PP/TPE-Mischung enthält.

7. Verfahren nach einem der vorhergehenden Ansprüche, **dadurch gekennzeichnet, dass** die Verkapselungszusammensetzung bei einer Temperatur zwischen 170 °C und 260 °C, vorzugsweise zwischen 170 °C und 220 °C, bei einem Druck zwischen 15 bar und 120 bar, vorzugsweise zwischen 15 bar und 80 bar, eingespritzt wird.

8. Verfahren nach einem der vorhergehenden Ansprüche, **dadurch gekennzeichnet, dass** der Schritt des Kühlens der flüssigen Verkapselungszusammensetzung durch aktives Kühlen der Verkapselungsform erfolgt.

## Claims

1. A process for manufacturing a complex motor vehicle glazing comprising a glass pane, an elastomer seal, and a metal insert overmolded by the elastomer seal, comprising
- inserting an edge of a glass pane and a metal insert into an encapsulation mold forming a leaktight cavity around the edge of the glass pane,
- filling the leaktight cavity containing the edge of the glass pane and the metal insert, by injecting an encapsulation composition comprising a polypropylene (PP)/thermoplastic elastomer (TPE) compound in the molten state,
- cooling the encapsulation composition so as to form an elastomer seal wherein the metal insert is integrated,
- releasing the elastomer seal, wherein the metal insert is integrated, from the mold,
the process being **characterized in that** said PP/TPE compound comprises from 30% to 80% by weight, preferably from 40% to 75% by weight and in particular from 45% to 70% by weight of polypropylene (PP), and **in that** the metal insert is covered over its entire surface liable to come into contact with the encapsulation composition, with a polypropylene coating.

2. The process as claimed in claim 1, **characterized in that** the surface area of the insert liable to come into contact with the encapsulation composition is between 10 cm² and 1000 cm².

3. The process as claimed in claim 1 or 2, **characterized in that** the TPE is chosen from
- unvulcanized ethylene-propylene-diene monomer (EPDM) rubber,
- partially vulcanized ethylene-propylene-diene monomer (EPDM) rubber, and
- styrene thermoplastic elastomers (TPE-S) such as poly(styrene-b-butadiene-b-styrene) block copolymers (SBS), poly(styrene-b-(ethylenebutylene)-b-styrene) block copolymers (SEBS) and poly(styrene-b-(ethylene-propylene)-b-styrene) block copolymers (SEPS).

4. The process as claimed in any one of the preceding claims, **characterized in that** the polypropylene coating covering the metal insert has a thickness of between 0.1 and 5 mm, preferably between 0.5 and 4 mm, in particular between 1 and 3 mm.

5. The process as claimed in any one of the preceding claims, **characterized in that** the encapsulation composition additionally contains mineral fillers such as chalk, kaolin, talc, zinc oxide and carbon black, processing aids such as oils, preferably mineral oils, or antioxidant or UV stabilizers.

6. The process as claimed in any one of the preceding claims, **characterized in that** the encapsulation composition comprises between 35% and 65% by weight, preferably between 45% and 60% by weight, in particular between 50% and 57% by weight of PP/TPE compound, relative to the total weight of the encapsulation composition.

7. The process as claimed in any one of the preceding claims, **characterized in that** the encapsulation composition is injected at a temperature of between 170°C and 260°C, preferably between 170°C and 220°C, under a pressure of between 15 bar and 120 bar, preferably between 15 bar and 80 bar.

8. The process as claimed in any one of the preceding claims, **characterized in that** the step of cooling the fluid encapsulation composition is carried out by active cooling of the encapsulation mold.
